# EUROPÄISCHE PATENTSCHRIFT

(11) **EP 1 519 150 B1**
(45) Veröffentlichungstag und Bekanntmachung des Hinweises auf die Patenterteilung: **19.01.2011**
(21) Anmeldenummer: 04104202.9
(22) Anmeldetag: 02.09.2004
(51) Int. Cl.: G01C 21/32, G01C 21/36

(54) **Verfahren zur Darstellung von Strassendaten in digitalen Karten sowie Verfahren zur Bestimmung der Position eines Fahrzeuges**
Method for the representation of road data in digital maps and method for determining the position of a vehicle
Procédé pour représenter des données de routes dans des plans numériques et procédé pour déterminer la position d'un véhicule

(30) Priorität: 23.09.2003 DE 10343944
(43) Veröffentlichungstag der Anmeldung: 30.03.2005
(73) Patentinhaber: ROBERT BOSCH GMBH, 70442 Stuttgart (DE)
(72) Erfinder: Neukirchner, Ernst-Peter, 31139, Hildesheim (DE)

(56) Entgegenhaltungen:
- EP-A- 1 122 626
- EP-A- 1 182 611
- DE-U1- 20 022 813
- US-A1- 2002 065 603

## Beschreibung

Die Erfindung betrifft ein Verfahren zur Darstellung von Straßendaten in digitalen Karten sowie ein Verfahren zur Bestimmung der Position eines Fahrzeuges, bei dem aus Daten von Sensoren für die Wegmessung, Richtungsmessdaten und Daten eines Satellitenortungssystemes die Position eines Fahrzeuges unter Verwendung einer digitalen Karte bestimmt wird.

Bestehende Navigations- und Fahrerinformationssysteme umfassen zumeist eine Einheit zur Positionsbestimmung, die eine durch Sensoren und andere Hilfsmittel, wie Ortungssatelliten, berechnete Position mit der Geometrie und Topologie eines Straßennetzes vergleicht und als Ergebnis dieses Vergleiches gegebenenfalls eine Positionskorrektur auf das Straßennetz vornimmt.

Das Straßennetz wird gemäß der Verfahren nach dem Stand der Technik durch die Mittellinien von Straßenabschnitten dargestellt, die in Kreuzungsbereichen durch Knotenpunkte miteinander verbunden sind. Die als digitale Karte bezeichnete Darstellung des Straßennetzes enthält üblicherweise keine Informationen, an welchen Stellen ein Fahrzeug das erfasste und abgespeicherte Straßennetz verlassen kann bzw. an welchen Stellen in das Straßennetz eingefahren werden kann, wenn dieses einmal verlassen wurde.

Die Daten bisher erfasster Straßen beinhalten meist auch keine oder nur sehr ungenaue Informationen, wie breit die Fahrbahn einer Straße ist. Die Information über die Straßenbreite, kann z. B. aus der heutzutage üblichen Klassifizierung eines Straßenabschnittes nür sehr grob und unsicher geschätzt werden.

Fahrinformationsysteme werden zukünftig Funktionen erfüllen, die weit über die Navigation und Zielführung hinausgehen und den Fahrer durch Assistenzfunktionen bei der Aufgabe der Fahrzeugführung unterstützen. Für diese Anwendungen werden Genauigkeitsanforde-rungen an die digitale Karte von 1 Meter und weniger erwartet. Die heutzutage übliche Darstellung einer Karte als Mittellinie kann solchen Anforderungen nicht mehr gerecht werden, dacine Mittellinie nur den Verlauf der Hauptfahrspuren grob repräsentiert und Änderungen der Breite durch Abbiegespuren, Parkstreifen und ähnliches nicht darstellhar sind.

Für Fahrerassistenzfunktion ist eine Vorausschau auf das Straßennetz und seine Eigenschaften erforderlich, die weit über die Möglichkeiten heutige digitaler Karten hinausgehen und in diesem Straßennetz eine genauere Positionsbestimmung als die auf die Mittellinie einer Straße erfordern.

Die EP-A-1 182 611 und EP-A-1 122 626 offenbaren die Darstellung von Straßendaten in digitalen Karten als Flächen.

Aufgabe der vorliegenden Erfindung ist es, die Möglichkeiten einer Darstellung von Straßen auf digitalen Karten sowie einer kartengestützten Positionsbestimmung so zu erweitern, dass die bisherige Genauigkeit wesentlich gesteigert werden kann und weitere, detailliertere Informationen über Eigenschaften von Straßenabschnitten und Kreuzungen für Anwendungen zur Fahrunterstützung verfügbar gemacht werden können.

Diese Aufgabe wird mit den Merkmalen der unabhängigen Patentansprüche gelöst.

Vorteilhaft werden Flächen innerhalb der digitalen Karte, insbesondere Flächen von Straßen und diese insbesondere fahrbahnweise, als Flächen repräsentiert, die als befahrbar, bedingt befahrbar oder nicht befahrbar gekennzeichnet sind und deren Ränder abschnittsweise als frei überfahrbar, bedingt überfahrbar oder nicht überfahrbar gekennzeichnet sind und dass bei einer Positionsbestimmung anhand einer solchen digitalen Karte diejenigen von mehreren möglichen Positionen ausgeschlossen werden, die in als nicht befahrbar gekennzeichneten Flächen liegen und dass solche Positionen auf Flächen eineschränkler Befahrbarkeit mit einer geringeren Wahrscheinlichkeit bewertet werden.

Durch die erfindungsgemäß veränderte Darstellung der Straßen in einer digitalen Karte ist es möglich, die Darstellung der Realität in einer digitalen Karte grundlegend zu verbessern, wobei gleichzeitig das Ziel erreicht wird, die Positionsbestimmung durch einen Kartenvergleich, das sogenannte "Map-Matching", zu verbessern.

Die Erfindung schlägt die datentechnische Beschreibung von Straßennetzen in Form von Flächen vor. Die Flächen repräsentieren Straßen und Kreuzungen sowie darin liegende, nicht befahrbare Flächen, wie z. B. Verkehrsinseln. Verkehrsrelevante Einrichtungen, wie Straßenmarkierungen und Beschilderungen entlang der Straße, können diesen Flächen mit erhöhter Genauigkeit zugeordnet werden.

Eine Weiterbildung der Erfindung sieht vor, dass den Rändern der Flächen entsprechend ihrer Überfahrbarkeit oder Befahrbarkeit unterschiedliche Eigenschaften oder Attribute zugeordnet werden, so dass es einem Fahrer oder einem Navigationssystem ermöglicht wird festzustellen, ob ein Abbiegen aus dem erfassten Netz oder ein Einfahren in das erfasste Netz möglich ist und in Betracht gezogen werden kann.

Weiterhin ist es möglich, dass innerhalb der Flächen liegende Bereiche entsprechend ihrer Überfahrbarkeit mit Attributen versehen werden, so dass wesentlich genauer angegeben werden kann, ob und wo eine Be- und Überfahrbarkeit der Straßenabschnitte gegeben ist.

Eine Weiterbildung sieht vor, dass sich Flächen, insbesondere auch befahrbare Flächen, räumlich überlagern können, so z.B. Überfizhrungen, Tunnel oder Unterführungen. Damit ist zu dokumentieren, dass von solchen Flächen räumlich oberhalb oder unterhalb einer anderen befahrbaren Flächen liegen, diese nicht zu erreichen sind.

Zudem ist vorgesehen, dass Werkstätten, Parkhäuser, Tankstellen oder andere, für ein Fahrzeug erreichbare Infrastruktureinrichtungen innerhalb der Karte als befahrbare Flächen ausgeben werden, obwohl diese streng genommen nicht zu den Straßen zu zählen sind.

Weiterhin ist es vorgesehen, dass die Befahrbarkeit gemäß der geltenden Verkehrsordnung dargestellt wird, dass also Einschränkungen hinsichtlich der Einbiegbarkeit oder auch der Befahrbarkeit hinsichtlich einzelner Fahrzeuge in Bezug auf das Gewicht in der digitalen Karte vermerkt sind und dass die solcherart gesperrten Straßenabschnitte entsprechend dargestellt sind.

Neben der Darstellung der Befahrbarkeit der Straße an sich ist es vorgesehen, dass die Ränder der Flächen gemäß der absoluten Be- und Überfahrbarkeit der an die Straßen angrenzenden Umgebung dargestellt werden, also dass beispielsweise Parkflächen, Felder oder sonstige Brachflächen, die ausnahmsweise befahrbar sind, als angrenzende Bereiche mit einem anderen Rand versehen werden als absolut nicht befahrbare Flächen, wie Häuser, Wasserflächen oder Gebiete, die durch Mauern oder tiefe Gräben von der Fahrbahn abgetrennt sind.

Neben einer Flächendarstellung der Straße ist es vorgesehen, dass zusätzlich eine Liniendarstellung vorgenommen wird, um neben der Darstellung des Straßennetzes durch Flächen eine Kompatibilität zu ermöglichen, so dass z. B. für Gebiete oder auf Straßen, für die erfindungsgemäße Daten noch nicht erfasst wurden, bisherige Verfahren weiterhin zur Anwendung kommen können, also dass Daten mit eingeschränktem Informationsgehalt vorliegen.

Durch das oben beschriebene Verfahren ist es möglich, Straßen und Kreuzungsbereiche besser als bisher auseinanderzuhalten. Bei der Darstellung von Straßen als Mittellinie und einer Kreuzung als Punkt liegt bei heutiger Technik der Übergang von der Straße in den Kreuzungsbereich noch im Verlauf einer Linie, die die Straße repräsentiert. Mit Hilfe der erfindungsgemäßen Darstellung kann der Übergang exakt, z. B. an der Haltelinie, erfolgen. Damit ergeben sich Vorteile für eine Zielführungs- und Fahrerassistenzfunktion.

Bei der Fahrt in Parkhäuser oder auf Parkplätzen kann bei heutigen Systemen eine irrtümliche Ausgabe von Fahrempfehlungen durch falsches Aufsetzen der Fahrzeugposition auf Linien benachbarter Straßen durch die präzisere Darstellung unterdrückt werden.

Für die Positionsbestimmung eines Fahrzeuges mittels Kartenvergleich, dem sogenannten Map-Matching, ermöglicht die neue Art der Straßendarstellung eine Ortung jeweils auf der richtigen Fahrbahnseite, statt bisher auf einer Mittellinie einer Straße. Bei breiten Straßen kann hierdurch die Position quer zur Fahrtrichtung um einige Meter exakter bestimmt werden.

Das Verlassen des Straßennetzes wird nur noch an denjenigen Stellen als mögliches Fahrmanöver in Betracht gezogen, an denen es gemäß dem Inhalt der digitalen Karte möglich erscheint. Für das Wiedereinfahren in das erfasste Straßennetz gilt das gleiche entsprechend.

Die Nachkalibrierung von Sensoren während der Fahrt kann schneller erfolgen und dadurch verbessert werden, da in vielen Fällen ein Abweichen aus dem digitalisierten Straßennetz ausgeschlossen werden kann und aus einer solchen Plausibilisierung auf Sensormessfehler geschlossen werden kann, die anschließend kompensiert werden können.

Bei der Positionsbestimmung kann die Entscheidung, welche der von einer Kreuzung abgehenden Straßen gewählt wurde, vereinfacht und sicherer gemacht werden.

Auch die Ortungssicherheit auf Plätzen ohne konkrete Regelungen für den Verkehrsverlauf und beim Befahren oder Verlassen von Parkhäusern oder Parkplätzen kann erhöht werden.

Für Fahrerassistenzfunktionen, die z. B. eine automatische Lichtsteuerung vorsehen oder Warnungen bei einem Verlassen der Fahrspuren ausgeben, ermöglicht die deutlich detailliertere Geometrie der Straßenbeschreibung eine verbesserte Funktionsweise.

Nachfolgend werden Ausführungsbeispiele der Erfindung anhand der beigefügten Figuren näher erläutert. Es zeigen:
- Figur 1 -: eine Karte gemäß dem erfindungsgemäßen Verfahren;
- Figur 2 -: eine digitale Karte mit Randdarstellung entsprechend der Befahrbarkeit; sowie
- Figur 3 -: eine Kreuzungsdarstellung einer erfindungsgemäßen digitalen Karte.

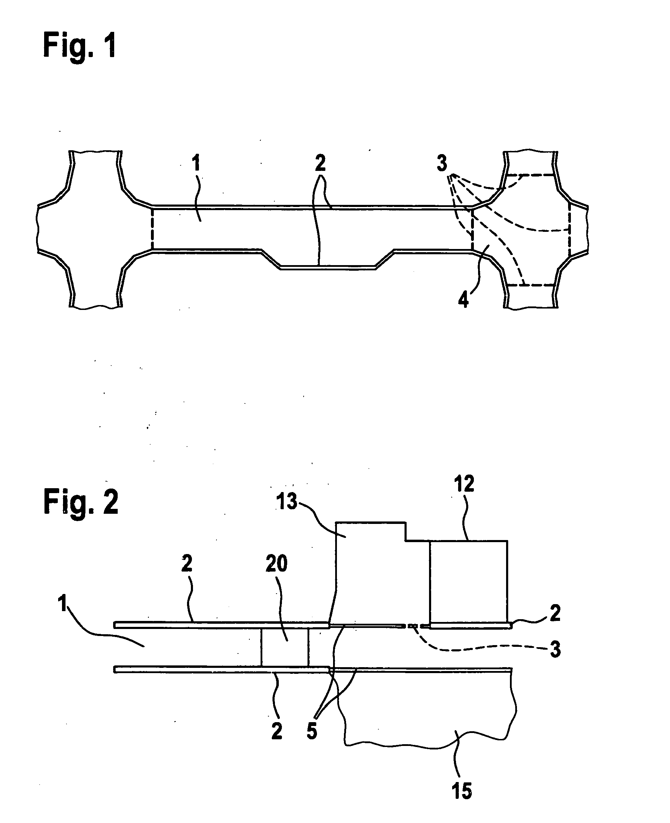

Figur 1 zeigt eine Straßendarstellung einer digitalen Karte, bei der die Straße als eine Fläche 1 dargestellt ist, die von einer seitlichen Einfassung als Rand 2 umgeben ist. Der Rand 2 besagt in der vorliegenden Darstellung, dass er nicht überfahrbar ist, wohingegen die Begrenzung des Straßenabschnittes an einer Einmündung in eine Kreuzungsfläche 4 als gepunktete Linie und damit als ein überfahrbarer Rand 3 dargestellt ist. Durch diese Fahrerinformations- und Navigationssysteme werden Informationen bereitgestellt, dass ein Verlassen der Straße über eine der Umrandungen 2 nach rechts oder links nicht angenommen werden kann, der dargestellte Straßenabschnitt gemäß der Fläche 1 jedoch an Kreuzungen 4 endet, wobei in diese uneingeschränkt eingefahren werden kann.

Die Figur 2 zeigt eine detailliertere und komplexere Darstellung einer Straßenstation mit einer Straßenfläche 1, die ebenfalls seitlich in Fahrtrichtung zunächst mit einem nicht überfahrbaren Rand 2 versehen ist. Dadurch wird angezeigt, dass hier aufgrund einer Brücke die Straße nicht verlassen werden kann. Weiterhin ist aufgrund eines Tunnels 20 die Fahrbahnumrandung als nicht überfahrbarer Rand 2 fortgeführt. Daran schließt sich eine bedingt überfahrbare Umrandung 5 an, beispielsweise als Schotterfläche oder eine bedingt befahrbare Fläche 15, wie eine Wiese, an.

Im Straßenverlauf kann diese bedingt überfahrbare Umrandung zu einer frei überfahrbaren Umrandung 3 werden, die zu einer frei befahrbaren Fläche 13 führt, beispielsweise eines Parkplatzes oder eines Parkhauses. Jenseits einer Fläche, die mit einem Rand 2 als nicht überfahrbare Grenze angesehen wird, liegen in der Regel nicht befahrbare Flächen 12, wie z. B. Wohnhäuser oder umzäunte Gelände.

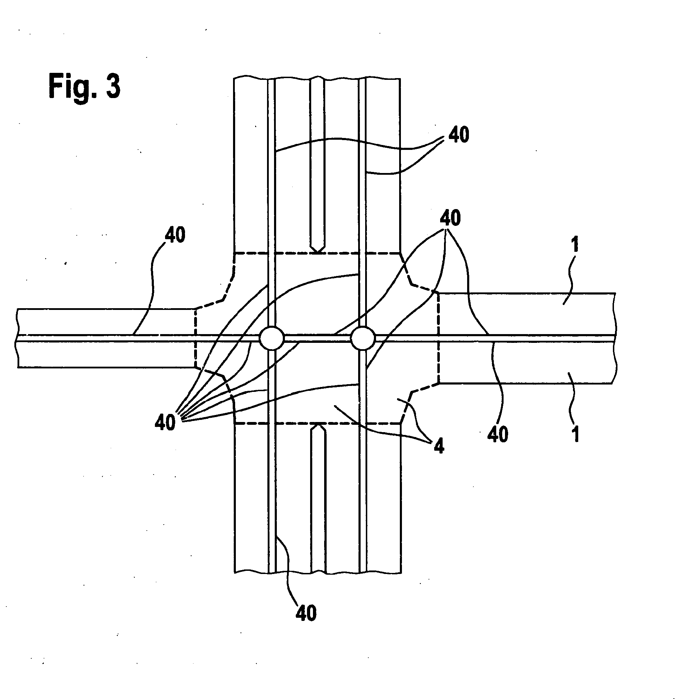

In der Figur 3 ist eine kombinierte Darstellung mehrerer Straßen in herkömmlicher Liniendarstellung sowie in der erfmdungsgemäßen Flächendarstellung der Straßen bzw. Fahrbahnen dargestellt. Die Mittellinien 40 einer herkömmlichen Straßendarstellung werden bei einer gemeinsamen Darstellung gemäß der Figur 3 verschiedenen Flächen 1 einer Flächendarstellung zugeordnet, wobei alle Mittellinien 40 eine herkömmlichen Straßendarstellung allen Straßen- und Kreuzungsflächen zugeordnet werden, in denen sie ganz oder teilweise verlaufen.

Gemäß der Figur 3 werden Straßen bzw. Fahrbahnen durch ihre Mittellinie 40 dargestellt, während erfindungsgemäß die Inhalte einer Karte zusätzlich durch Flächen 1 beschrieben werden, wobei Kreuzungen 4 ebenfalls flächenhaft dargestellt werden, da sie einen Sonderfall von Straßenflächen 1 bilden.

Gemäß Figur 1 werden die Inhalte der Karte ausschließlich durch Flächen 1 beschrieben, wobei diese Flächen durch ihre Umrandungen 2, 3 sowie ihre Eigenschaften definierende Attribute und in ihr liegende weitere Karteninhalte beschrieben werden. Die Eigenschaften definierenden Attribute werden farblich oder anders grafisch dargestellt, ebenfalls können innerhalb der Fläche 1 liegenden Hindernisse, wie Verkehrsinseln, als nicht befahrbare Flächen 12 dargestellt werden.

Die Flächen 1 werden unter anderem durch unterschiedliche Grade der Befahrbarkeit durch Fahrzeuge beschrieben, wobei die Befahrbarkeit ihrer Berandung 2, 3 eine weitere Eigenschaft der Flächen ist. In den Flächen 1 liegende Karteninhalte können der Fläche 1 zugeordnet werden, wobei neben Verkehrsinseln auch Straßenmarkierungen oder Beschilderungen oder Einfahrverbote berücksichtigt werden können.

Die Eigenschaft der Befahrbarkeit ist für Flächen 1, die Straßen repräsentieren, in der Regel uneingeschränkt vorhanden. Für einschränkende Verkehrsregelungen können befahrbare Flächen 1 zusätzlich mit Attributen versehen sein, beispielsweise indem diese Flächen 1 farblich anders ausgestaltet oder mit einem bestimmten Symbol versehen sind.

Weitere, an die Straßen angrenzende freie Flächen können bedingt befahrbar sein, wobei die bedingt befahrbaren Flächen 15 entsprechend gekennzeichnet werden. Bedingt befahrbare Flächen 15 werden in der Regel nicht befahren, können aber in Ausnahmesituationen ansteuerbar sein, wie z. B. Ackerflächen oder Wiesen.

Die dritte Art von Flächen, die an Straßen angrenzen können, sind nicht befahrbare Flächen 12, die entweder bebaut sind oder Wasserflächen oder gebirgige Flächen darstellen, deren Befahrung nicht möglich ist.

In der digitalen Karte gespeicherte Flächen können sich räumlich überlagern, insbesondere können Brücken oder Tunnel 20 eingezeichnet und entsprechend dargestellt werden, um die Genauigkeit der Information der Karte zu erhöhen. Befinden sich in Gebäuden Werkstätten, Parkgaragen, Tankstellen oder ähnliches, so ist an dieser Stelle eine befahrbare Fläche 13 abgespeichert und dargestellt, die z. B. der Fläche der Garage, der Werkstatt oder der Tankstelle entspricht.

Die Umrandung jeder Fläche 1 trägt mit abschnittsweise unterschiedlichen Werten die Eigenschaft der Überfahrbarkeit. Ebenfalls können die angrenzenden Flächen 12, 13, 15 umrandet sein und mit abschnittsweise unterschiedlichen Werten hinsichtlich der Eigenschaft der Überfahrbarkeit der Grenzen versehen sein.

Der Übergang zwischen zwei zusammenhängenden Straßenabschnitten 1 oder einem Straßenabschnitt 1 und einem Kreuzungsbereich 4 ist immer befahrbar, er kann jedoch durch Attribute eingeschränkt werden, die die in der Realität existierenden Verkehrsregelungen repräsentieren.

Die seitliche Begrenzung einer Straße wird in der Regel nicht überfahren, jedoch ist ein solches Manöver nicht ganz auszuschließen, wenn die Gegebenheiten es zulassen. Dementsprechend sind solche Ränder 5 dann als bedingt befahrbar gekennzeichnet.

In weiteren Fällen sind die seitlichen Begrenzungen 2 von Straßen absolut nicht überfahrbar, typische Fälle hierfür sind Brücken und Tunnel 20 oder Straßen mit tiefen seitlichen Gräben oder solche, die auf Dämmen oder durch Geländeeinschnitte verlaufen.

Sofern Flächen nicht explizit mit Eigenschaften erfasst wurden, also Zwischenräume zwischen erfassten Flächen, können diese zweckmäßigerweise als bedingt befahrbar angenommen werden.

Jedes der Flächenelemente 1 kann einem Element oder mehreren Elementen einer konventionellen digitalen Karte zugeordnet werden, wie dies in der Figur 3 beschrieben ist, so dass eine gemischte Verwendung beider Darstellungsarten ermöglicht wird. Eine Straßenfläche 1 kann ein Bezug zu einem Linienelement 40 besitzen, wie sie bisher zur Darstellung von Straßenmittellinien verwendet werden. Eine Kreuzungsfläche 4 kann mehreren Linienelementen 40 zugeordnet sein, die bisher den Verlauf von Fahrbahnen in einer Kreuzung darstellten. Damit ist die Weiterverwendung von Routenberechnungsalgorithmen auf einem linienbasierten Graphen weiterhin möglich, während andere Funktionen, wie die Positionsbestimmung oder eine Kartendarstellung, die weitaus genauere Darstellung der Flächen 1 nutzen kann.

Ebenfalls ist es möglich, die oben beschriebene flächenbasierte, digitale Karte nur abschnitts- bzw. gebietsweise zu verwenden, wenn für die übrigen Abschnitte die genaueren Daten nicht verfügbar sind. Damit wird die Kompatibilität und ein fließender Übergang zu bestehenden Systemen und Verfahren gewährleistet.

Das Positionsbestimmungsverfahren nutzt die Eigenschaften der flächenbasierten digitalen Karte aus, um dadurch eine höhere Genauigkeit zu erreichen. Dabei wird eine Koppelortung durchgeführt, wie sie aus den meisten existierenden Navigationssystemen für Kraftfahrzeuge bekannt sind. Aus Sensoren zur Messung von Weg- und Fahrtrichtung wird in vorgegebenen Intervallen, ausgehend von einer bekannten Position und einer bekannten Richtung, eine jeweils aktualisierte Position berechnet. Als Sensoren für die Wegmessung können z. B. übliche Impulsgeber für Tachos verwendet werden. Die Richtungsmessung nach einem der bekannten Verfahren, z. B. durch einen elektronischen Kompass, durch Auswertung von Drehzahldifferenzen des linken und rechten Rades einer Achse, durch Auswertung der Signale eines Drehratensensors oder durch Richtungsbestimmung aus dem Dopplereffekt der Signale eines Satellitenortungssystems sind möglich. Das üblicherweise als Map-Matching bezeichnete Korrekturverfahren der Position anhand der digitalen Karte stellt für eine Position fest, in welcher der in der Karte gespeicherten Flächen 1 sich das Kraftfahrzeug befindet.

Das Positionsbestimmungsverfahren kann mehrere potentielle Pfade in der Karte verfolgen, die jeweils mit einem Wahrscheinlichkeitswert bewertet werden. Pfade, deren Wahrscheinlichkeitswert unter ein vorgegebenes Minimum sinken, werden nicht weiterverfolgt. Da eine der Eigenschaften von Kopplungsortungsverfahren die Fehlerakkumulation ist, kann für jede so berechnete Funktion ein Vertrauensbereich ermittelt werden, der mögliche Fehler durch eine Unschärfe der Position berücksichtigt. Damit ist es möglich, dass eine Position potentiell in mehreren Flächen enthalten sein kann, weil die Flächen sich möglicherweise überlagern. Auf jede dieser Flächen wird eine Position mit der jeweils größten Wahrscheinlichkeit berechnet..

Positionen, die in absolut unbefahrbaren Flächen 12 liegen, werden nicht weiter berücksichtigt. Positionen, die in bedingt befahrbaren Flächen 15 liegen, werden gegenüber solchen in frei befahrbaren Flächen 12 mit geringerer Wahrscheinlichkeit bewertet.

Jeder durch die Koppelortung berechnete Bewegungsvektor wird zu den oben genannten Positionen addiert und es wird geprüft, ob die dadurch neu entstandenen Positionen jeweils noch innerhalb der gleichen Flächen 1 liegen. Wenn dieses für eine Position der Fall ist, wird diese aktualisiert und im nächsten Schritt in der gleichen Weise weiterhin berücksichtigt.

Wird durch den Bewegungsvektor der Koppelortung die Grenze einer Fläche geschnitten, wird überprüft, ob die Grenze an diese Fläche als überfahrbar, also als eine frei überfahrbare Umrandung 3 gespeichert wurde. Ist die Überfahrbarkeit gegeben, wird die Position aktualisiert und nach dem nächsten Koppelortungsschritt in der neuen, benachbarten Fläche 1 fortgesetzt.

Ist die Überfahrbarkeit nicht gegeben, liegt also eine nicht überfahrbare Umrandung 2 vor, wird die Umrandung der Fläche 1 oder 13 innerhalb des Vertrauensbereiches für die jeweilige Position auf einen überfahrbaren Abschnitt 3, 5 abgesucht. Liegt eine solche Stelle der Überfahrbarkeit innerhalb eines Vertrauensbereiches vor, wird der Bewegungsvektor so verschoben, dass er die Umrandung der Fläche 1, 13 innerhalb des überfahrbaren Abschnittes 3, 5 schneidet und die Aktualisierung der Position wird in der benachbarten Fläche 1 fortgesetzt.

Liegt eine solche Stelle nicht vor, wird die Aktualisierung der Position auf den Rand der Fläche begrenzt und die Wahrscheinlichkeit für diese Position in Abhängigkeit des Winkels zwischen Umrandung und Bewegungsvektor geringer beurteilt.

Ist die Überfahrbarkeit einer Grenze nur bedingt gegeben, so werden entsprechend der beiden zuletzt genannten Verfahren zwei aktualisierte Positionen erzeugt, deren Wahrscheinlichkeit in Abhängigkeit vom Grad der Überfahrbarkeit bewertet wird.

In Abhängigkeit vom Auftreffwinkel eines Bewegungsvektors auf nicht oder nur bedingt befahrbare Umrandungen 2, 3 und in Abhängigkeit von der Häufigkeit solcher aufeinanderfolgender Ereignisse können Parameter für die Nachkalibrierung der richtungsmessenden Sensorik abgeleitet werden.

Wird die Position auf einer Straßenfläche 1 entlang des Straßenverlaufes aktualisiert, so kann eine Drift der Position gegen den linken oder rechten Straßenrand durch Korrektur der Richtungsänderungen kompensiert werden.

Folgt eine aus aufeinanderfolgend berechneten Positionen bestimmbare Kurve, gegebenenfalls nach oben beschriebener Richtungskorrektur, dem Straßenverlauf, so kann diese auf die Mitte der jeweiligen Fahrbahnseite korrigiert werden, die der regulären Verkehrsseite unter Berücksichtigung des Rechts- und Linksverkehrs entspricht.

Verläuft ein Pfad mit hoher Wahrscheinlichkeit in ein Parkhaus, auf einem umzäunten Parkplatz oder auf eine sonstige, frei befahrbare, begrenzte Fläche 13, so kann durch die Beschreibung der Umrandung sichergestellt werden, dass der Pfad nur durch die Ausfahrten wieder in das Straßennetz zurückführen kann. Eine gegebenenfalls laufende Zielführungsfunktion kann innerhalb des Parkhauses oder des Parkplatzes die Ausgabe von Fahrempfehlungen vermeiden oder sogar vor Wiedereinfahrt anzeigen, in welcher Richtung in das Straßennetz abzubiegen ist.

Bisherige digitale Karten und Positionsbestimmungsverfahren geben in solchen Fällen häufig Fahrempfehlungen aus, wenn z. B. auf dem Parkplatz ein längeres Stück parallel zu einer existierenden Straße gefahren wurde. Der hierfür maßgebliche Grund ist der ausschließliche geometrische Vergleich der gefahrenen Strecke mit dem Straßennetz mit der Annahme des Wiedereinfahrens in das Netz. Diese vereinfachende Annahme und die daraus resultierenden Nachteile können durch die oben beschriebenen, erfindungsgemäßen Verfahren vermieden werden.

## Patentansprüche

1. Verfahren zur Darstellung von Straßennetzen in digitalen Karten, wobei Straßen und Kreuzungen innerhalb der Karte durch Flächen (1, 4) repräsentiert werden,
**dadurch gekennzeichnet,**
**dass** weitere Flächen in der Karte, insbesondere an die Straßen angrenzende Flächen (12, 13, 15), entsprechend ihrer Befahrbarkeit, bedingten Befahrbarkeit oder Nichtbefahrbarkeit als befahrbare Flächen (13), bedingt befahrbare Flächen (15) oder nicht befahrbare Flächen (12) **gekennzeichnet** werden.

2. Verfahren nach Anspruch 1, **dadurch gekennzeichnet, dass** Rändern (2, 3,5) der Flächen (1, 4, 12, 13, 15) entsprechend ihrer Überfahrbarkeit unterschiedliche Eigenschaften und Attribute zugeordnet werden..

3. Verfahren nach Anspruch 1 oder 2, **dadurch gekennzeichnet, dass** die Flächen (1, 4, 12, 13, 15) entsprechend ihrer Befahrbarkeit mit entsprechenden Attributen versehen werden.

4. Verfahren nach einem der vorhergehenden Ansprüche, **dadurch gekennzeichnet, dass** innerhalb der Flächen (1, 4, 12, 13, 15) liegende Bereich entsprechend ihrer Be- oder Überfahrbarkeit mit Attributen versehen werden.

5. Verfahren nach einem der voranstehenden Ansprüche, **dadurch gekennzeichnet, dass** Werkstätten, Parkhäuser, Tankstellen oder ändere für ein Fahrzeug erreichbare Infrastruktureinrichtungen innerhalb der Karte als befahrbare Flächen (13) dargestellt werden.

6. Verfahren nach einem der voranstehenden Ansprüche, **dadurch gekennzeichnet, dass** die Befahrbarkeit der Flächen (1, 4,12,13,15) gemäß der geltenden Verkehrsordnung **gekennzeichnet** wird.

7. Verfahren nach einem der voranstehenden Ansprüche, **dadurch gekennzeichnet, dass** die Ränder (2, 3, 5) der Flächen (1, 4, 12, 13, 15) gemäß der absoluten Be- und Überfährbarkeit der an die Straßen angrenzenden Umgebung dargestellt werden.

8. Verfahren nach einem der voranstehenden Ansprüche, **dadurch gekennzeichnet dass** neben einer Flächendarstellung der Straße auch eine Liniendarstellung vorgenommen wird.

9. Verfahren nach einem der voranstehenden Ansprüche, **dadurch gekennzeichnet, dass** die Flächen (1, 4, 12, 13, 15) entsprechend ihrer Befahrbarkeit, farblich oder anderweitig graphisch unterschiedlich dargestellt werden.

10. Verfahren nach einem der Anspruch 2 bis 9, **dadurch gekennzeichnet, dass** die Ränder (2, 3, 5) entsprechend ihrer Überfahrbarkeit farblich oder anderweitig graphisch unterschiedlich dargestellt werden.

11. Verfahren zur Bestimmung der Position eines Fahrzeuges, bei dem aus Daten von Sensoren für die Weg- und Richtungsmessung und/oder Daten eines Satellitenortungssystems die Position eines Fahrzeuges unter Verwendung einer digitalen Karte bestimmt wird, **dadurch gekennzeichnet, dass** von mehreren in Betracht kommenden Positionen diejenigen ausgeschlossen werden, die nur in Flächen (12) der digitalen Karte liegen, die als unbefahrbar **gekennzeichnet** sind und dass solche Positionen, die in Flächen (15) eingeschränkter Befahrbarkeit liegen, mit einer geringeren Wahrscheinlichkeit bewertet werden.

12. Verfahren nach Anspruch 11, **dadurch gekennzeichnet, dass** bei einer Aktualisierung einer Position ausgehend von der vorausgegangenen Position kein Rand (2) einer Fläche überschritten wird, der als nicht-überfahrbar **gekennzeichnet** ist.

13. Verfahren nach Anspruch 11 oder 12, **dadurch gekennzeichnet, dass** bei einer Aktualisierung einer Position und einer ausgehend von der vorausgegangenen Position stattfindenden Überschreitung eines als bedingt überfahrbaren Randes (5) jeweils eine Position innerhalb und außerhalb der durch den Rand (5) begrenzten Fläche im weiteren in Betracht gezogen wird.

## Claims

1. Method for presenting road networks in digital maps, wherein roads and junctions are represented within the map by areas (1, 4),
**characterized**
**in that** further areas in the map, particularly areas (12, 13, 15) which adjoin the roads, are denoted as transitable areas (13), partly transitable areas (15) or non-transitable areas (12) in accordance with the transitability, part-transitability or non-transitability of said areas.

2. Method according to Claim 1, **characterized in that** fringes (2, 3, 5) of the areas (1, 4, 12, 13, 15) are assigned different properties and attributes in accordance with the crossability of said fringes.

3. Method according to Claim 1 or 2, **characterized in that** the areas (1, 4, 12, 13, 15) are provided with appropriate attributes in accordance with the transitability of said areas.

4. Method according to one of the preceding claims, **characterized in that** regions situated within the areas (1, 4, 12, 13, 15) are provided with attributes in accordance with the transitability or crossability of said regions.

5. Method according to one of the preceding claims, **characterized in that** garages, multistorey car parks, filling stations or other infrastructure facilities which can be reached by a vehicle are presented within the map as transitable areas (13).

6. Method according to one of the preceding claims, **characterized in that** the transitability of the areas (1, 4, 12, 13, 15) is denoted on the basis of the applicable traffic regulations.

7. Method according to one of the preceding claims, **characterized in that** the fringes (2, 3, 5) of the areas (1, 4, 12, 13, 15) are presented on the basis of the absolute transitability and crossability of the surroundings which adjoin the roads.

8. Method according to one of the preceding claims, **characterized in that** aside from an area presentation of the road, a line presentation is also performed.

9. Method according to one of the preceding claims, **characterized in that** the areas (1, 4, 12, 13, 15) are presented in different colours or in otherwise different graphical form in accordance with the transitability of said areas.

10. Method according to one of Claims 2 to 9, **characterized in that** the fringes (2, 3, 5) are presented in different colours or in otherwise different graphical form in accordance with the crossability of said fringes.

11. Method for determining the position of a vehicle, in which data from sensors for path and direction measurement and/or data from a satellite position-finding system are used to determine the position of a vehicle using a digital map, **characterized in that** those of a plurality of feasible positions which are situated only in areas (12) of the digital map which are denoted as non-transitable are excluded and **in that** such positions as are situated in areas (15) with restricted transitability are assessed with a relatively low probability.

12. Method according to Claim 11, **characterized in that** when a position is updated on the basis of the preceding position, no area fringe (2) which is denoted as non-crossable is transgressed.

13. Method according to Claim 11 or 12, **characterized in that** when a position is updated and a fringe (5) which is denoted as part-crossable has been transgressed on the basis of the preceding position, a respective position inside and outside the area bounded by the fringe (5) is subsequently considered.

## Revendications

1. Procédé pour représenter des réseaux routiers sur des cartes numériques, les routes et les intersections étant représentées par des surfaces (1, 4) à l'intérieur de la carte, **caractérisé en ce que** des surfaces supplémentaires sont identifiées sur la carte, notamment des surfaces (12, 13, 15) juxtaposées aux routes, en fonction de leur état carrossable, de leur état carrossable sous certaines conditions ou de leur état non carrossable, en tant que surfaces carrossables (13), de surfaces carrossables sous certaines conditions (15) ou de surfaces non carrossables (12).

2. Procédé selon la revendication 1, **caractérisé en ce que** des propriétés et des attributs différents sont affectés aux bords (2, 3, 5) des surfaces (1, 4, 12, 13, 15) en fonction de leur aptitude au franchissement par des véhicules.

3. Procédé selon la revendication 1 ou 2, **caractérisé en ce que** les surfaces (1, 4, 12, 13, 15) sont dotées d'attributs correspondants en fonction de leur état carrossable.

4. Procédé selon l'une des revendications précédentes, **caractérisé en ce que** la zone qui se trouve à l'intérieur des surfaces (1, 4, 12, 13, 15) est dotée d'attributs en fonction de son état carrossable ou de son aptitude au franchissement par des véhicules.

5. Procédé selon l'une des revendications précédentes, **caractérisé en ce que** les ateliers, les parkings couverts, les stations-service ou les autres équipements d'infrastructure accessibles à un véhicule sont représentés à l'intérieur de la carte en tant que surfaces carrossables (13).

6. Procédé selon l'une des revendications précédentes, **caractérisé en ce que** l'état carrossable des surfaces (1, 4, 12, 13, 15) est identifié conformément au code de la route en vigueur.

7. Procédé selon l'une des revendications précédentes, **caractérisé en ce que** les bords (2, 3, 5) des surfaces (1, 4, 12, 13, 15) sont représentés conformément à l'état carrossable et à l'aptitude au franchissement par des véhicules absolus de l'environnement juxtaposé aux routes.

8. Procédé selon l'une des revendications précédentes, **caractérisé en ce qu'**outre une représentation des routes sous forme de surfaces, elles sont également représentées sous forme de lignes.

9. Procédé selon l'une des revendications précédentes, **caractérisé en ce que** les surfaces (1, 4, 12, 13, 15) sont représentées différemment par des couleurs ou d'autres graphismes en fonction de leur état carrossable.

10. Procédé selon l'une des revendications 2 à 9, **caractérisé en ce que** les bords (2, 3, 5) sont représentés différemment par des couleurs ou d'autres graphismes en fonction de leur aptitude au franchissement par des véhicules.

11. Procédé pour déterminer la position d'un véhicule, dans lequel la position d'un véhicule est déterminée en utilisant une carte numérique à partir des données de capteurs de mesure de trajet et de direction et/ou des données d'un système de localisation par satellite, **caractérisé en ce que** parmi plusieurs positions considérées, sont exclues celles qui ne se trouvent que dans les surfaces (12) de la carte numérique qui sont identifiées comme non carrossables et **en ce que** les positions qui se trouvent dans les surfaces (15) dont l'état carrossable est limité sont évaluées avec une probabilité inférieure.

12. Procédé selon la revendication 11, **caractérisé en ce que** lors d'une actualisation d'une position, aucun bord (2) d'une surface identifiée comme non carrossable n'est traversé à partir de la position précédente.

13. Procédé selon la revendication 11 ou 12, **caractérisé en ce que** lors d'une actualisation d'une position et d'une traversée d'un bord (5) franchissable sous certaines conditions qui a lieu à partir de la position précédente, une position à l'intérieur et à l'extérieur de la surface délimitée par le bord (5) est en plus à chaque fois prise en considération.
